# FASCICULE DE BREVET EUROPEEN

(11) **EP 3 299 248 B1**
(45) Date de publication et mention de la délivrance du brevet: **02.11.2022**
(21) Numéro de dépôt: 17192184.4
(22) Date de dépôt: 20.09.2017
(51) Int. Cl.: B61F 19/00, B60T 7/12, B61F 9/00, B61L 23/04

(54) **DISPOSITIF DE DÉTECTION D'OBSTACLE POUR UN VÉHICULE FERROVIAIRE**
ERKENNUNGSVORRICHTUNG EINES HINDERNISSES FÜR SCHIENENFAHRZEUG
AN OBSTACLE DETECTION DEVICE, FOR A RAILWAY VEHICLE

(30) Priorité: 21.09.2016 FR 1658851
(43) Date de publication de la demande: 28.03.2018
(73) Titulaire: ALSTOM Transport Technologies, 93400 Saint-Ouen (FR)
(72) Inventeur: THEVENOT, Maxime, 71390 VILLENEUVE EN MONTAGNE (FR)
(74) Mandataire: Lavoix

(56) Documents cités:
- EP-A2- 2 548 783
- WO-A1-2015/086456
- WO-A1-2015/155420
- CN-A- 103 303 338
- KR-B1- 100 837 174
- KR-B1- 101 048 738

## Description

La présente invention concerne un dispositif de détection d'obstacle pour un véhicule ferroviaire.

On connait déjà, dans l'état de la technique, notamment d'après KR10148738 B1, un dispositif de détection d'obstacle comprenant un assemblage de détection d'un impact sur une barre. Ce dispositif est apte à déclencher un système de freinage lorsque l'impact sur la barre est supérieur à un seuil de détection prédéfini.

Ce dispositif est destiné à détecter tout type d'obstacle sur une voie ferrée, avertir le conducteur et anticiper le freinage d'un véhicule ferroviaire.

Cependant un tel dispositif de détection n'est pas entièrement satisfaisant. En effet le seuil de détection est généralement difficile à régler.

L'invention a notamment pour but de fournir un dispositif de détection dont le seuil de détection est facilement réglable, afin de s'adapter de manière optimale au véhicule.

A cet effet, l'invention a pour objet un dispositif de détection d'obstacle selon la revendication 1.

Grâce aux moyens de réglage, l'effort de rappel appliqué par l'organe élastique sur le levier peut être réglé finement.

Le dispositif de détection selon l'invention peut comprendre l'une ou plusieurs des caractéristiques suivantes, prises isolément ou suivant toutes combinaisons techniquement possibles :
- Le dispositif de détection comporte une tige logée dans le ressort hélicoïdal, et propre à guider ce ressort.
- Les moyens de réglage comportent un organe de réglage, portant le premier siège, mobile en rotation autour du deuxième axe et propre à se déplacer en direction du deuxième siège lorsqu'il est tourné autour du deuxième axe suivant un sens de rotation prédéterminé.
- Le contacteur comprend un galet destiné à entrer en contact avec le doigt de déclenchement.
- Le levier est articulé autour d'une liaison pivot élastique par rapport au boîtier.
- Le levier porte une butée, destinée à coopérer en position d'activation avec une butée complémentaire ménagée sur le boîtier, pour limiter le mouvement en rotation du levier.

L'invention a également pour objet un procédé de détection d'un obstacle pour un véhicule ferroviaire, à l'aide d'un dispositif de détection tel que défini précédemment, comprenant les étapes suivantes :
- impact d'un obstacle sur la barre de détection ;
- déplacement de la barre de détection en réponse à l'impact, déplacement du levier vers sa position d'activation conjointement à la barre de détection, à l'encontre de l'effort de rappel généré par l'organe élastique ;
- activation du dispositif de déclenchement par le levier en position d'activation ; et
- activation d'une procédure de freinage.

L'invention a enfin pour objet un procédé de réglage d'un dispositif de détection tel que défini précédemment, comprenant les étapes suivantes :
- choix de l'organe élastique,
- installation de l'organe élastique dans le boîtier, et
- réglage de la précontrainte sur l'organe élastique par manipulation des moyens de réglage.

L'invention sera mieux comprise à la lecture de la description qui va suivre, donnée uniquement à titre d'exemple, et faite en se référant aux dessins annexés, sur lesquels :
- la figure 1 est une vue en perspective d'un dispositif de détection selon un exemple de mode de réalisation de l'invention ;
- la figure 2 est une vue en coupe transversale du dispositif de détection de la figure 1.

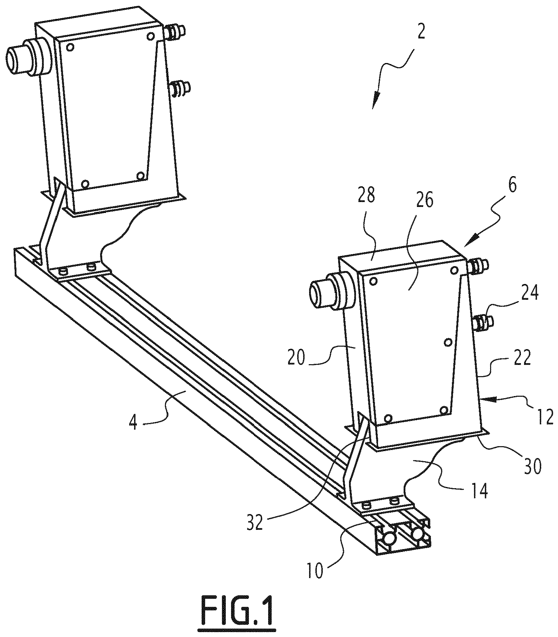

On a représenté, sur la figure 1, un dispositif 2 de détection d'obstacles.

Le dispositif de détection 2 est destiné à équiper un véhicule ferroviaire circulant sur une voie ferrée, en vue de détecter un obstacle situé sur la voie ferrée. Ce dispositif de détection permet d'appliquer une procédure de freinage d'urgence lorsque cela est nécessaire.

En considérant le sens de circulation du véhicule, le dispositif de détection 2 est situé en avant du véhicule.

Le dispositif de détection 2 comprend une barre de détection 4 qui s'étend transversalement par rapport au véhicule. Cette barre de détection 4 est agencée en avant du véhicule, si bien qu'en cas d'obstacle sur la voie, cet obstacle vient en impact contre cette barre de détection 4.

Le dispositif de détection 2 comporte par ailleurs au moins un assemblage 6 de détection de l'impact, supportant la barre de détection 4, ainsi qu'un dispositif de déclenchement 8, destiné à être activé par l'assemblage de détection 6 en cas d'impact avec un obstacle.

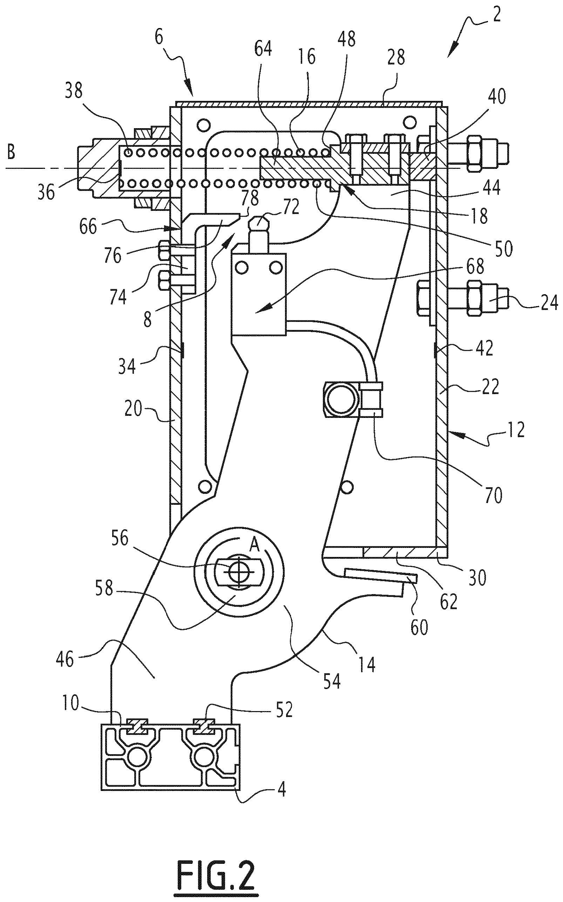

L'assemblage de détection 6 et le dispositif de déclenchement 8 sont représentés plus en détail sur la figure 2.

La barre de détection 4 présente un profil adapté pour intercepter un choc avec un obstacle. Par exemple, la barre de détection 4 est de forme générale à section rectangulaire.

La barre de détection 4 est par exemple creuse, et comporte un rail de fixation 10 destiné à coopérer avec l'assemblage de détection 6 de manière à fixer la barre de détection 4 sur cet assemblage de détection 6.

Comme cela est représenté sur la figure 1, le dispositif de détection 2 comporte deux assemblages de détection 6, chacun portant une extrémité respective de la barre de détection 4. Ces deux assemblages de détection 6 sont par exemple identiques.

En variante, le dispositif de détection 2 pourrait comporter un unique assemblage de détection 6 à une extrémité de la barre de détection 4, et un assemblage de support simple à l'autre extrémité de la barre de détection 4.

Comme illustré sur la figure 2, l'assemblage de détection 6 comprend un boîtier 12, rapporté sur le véhicule, de manière fixe par rapport au véhicule.

L'assemblage de détection 6 comporte par ailleurs un levier 14 solidaire de la barre de détection 4, un organe élastique 16 s'étendant entre le levier 14 et le boitier 12, et des moyens de réglage 18 pour appliquer une précontrainte sur l'organe élastique 16.

Le levier 14 est mobile en rotation par rapport au boîtier 12, autour d'un premier axe A sensiblement parallèle à la barre de détection 4, entre une position de repos et une position d'activation.

Dans l'exemple décrit, l'organe élastique 16 est un ressort hélicoïdal de compression, s'étendant le long d'un deuxième axe B perpendiculaire au premier axe A, entre une première extrémité 38 en appui sur un premier siège porté par le boîtier 12, et une deuxième extrémité 50 en appui sur un deuxième siège 48 porté par le levier 14. L'organe élastique 16 applique un effort de poussée tendant à éloigner les premier et deuxième sièges l'un de l'autre. Ainsi, l'organe élastique 16 applique sur le levier 14 un effort de rappel vers sa position de repos.

Le boîtier 12 comprend :
- une paroi frontale 20 dirigée vers l'avant du véhicule,
- une paroi arrière 22 propre à être fixée au véhicule, par exemple à un châssis de bogie du véhicule, par l'intermédiaire d'éléments de fixation 24,
- deux parois latérales 26 de protection des éléments contenus dans le boîtier 12,
- une paroi supérieure 28, et
- une paroi inférieure 30 opposée à la paroi supérieure 28 et définissant un passage 32 propre à recevoir une partie du levier 14.

La paroi frontale 20 du boîtier 12 présente une surface interne frontale 34, et comporte une ouverture de passage de l'organe élastique 16.

Le boîtier 12 porte, en regard de cette ouverture de passage, un organe de réglage 36 comprenant le premier siège pour l'organe élastique 16, et logeant une première extrémité 38 de l'organe élastique 16, venant en appui contre ce premier siège. L'organe de réglage 36 s'étend en saillie vers l'extérieur du boîtier 12, de manière à être accessible depuis l'extérieur de ce boîtier 12.

La paroi arrière 22 du boîtier 12 comprend une butée arrière 40 située sur une surface interne arrière 42 de la paroi arrière 22, et définissant un point d'appui du levier 14 en position de repos.

Le levier 14 présente une extrémité supérieure 44 située à l'intérieur du boîtier 12 et une extrémité inférieure 46 solidaire de la barre de détection 4.

L'extrémité supérieure 44 du levier 14 porte le deuxième siège 48 avec lequel coopère la deuxième extrémité 50 de l'organe élastique 16.

L'extrémité inférieure 46 du levier 14 est fixée à la barre de détection 4 par l'intermédiaire de moyens de fixation 52 coopérant avec le rail de fixation 10 de la barre de détection 4.

Le levier 14 comprend une partie intermédiaire 54 située entre l'extrémité supérieure 44 et l'extrémité inférieure 46, et présentant une articulation 56 par rapport au boîtier 12, cette articulation 56 étant définie autour du premier axe A.

Avantageusement, l'articulation 56 entre le boîtier 12 et la partie intermédiaire 54 du levier 14 est élastique et comprend une âme 58 réalisée en matériau élastique, par exemple en élastomère. Cette articulation élastique 56 participe au rappel du levier 14 vers sa position de repos.

En position de repos, la barre de détection 4 est située en avant du boîtier 12 et l'extrémité supérieure 44 du levier 14 est maintenue en appui sur la butée arrière 40 du boîtier 12 par l'organe élastique 16.

En position d'activation, la barre de détection 4 est déplacée vers l'arrière du boîtier 12 et l'extrémité supérieure 44 du levier 14 comprime l'organe élastique 16 selon le deuxième axe B.

En position d'activation, le levier 14 est positionné de manière à activer le dispositif de déclenchement 8.

Le levier 14 comprend avantageusement une butée de fin de course 60 qui s'étend en saillie vers l'arrière du boîtier 12 au niveau de l'articulation 56. En position d'activation du levier 14, la butée de fin de course 60 coopère avec une butée complémentaire 62 ménagée sur le boîtier 12. De cette manière, la butée de fin de course 60 limite le mouvement en rotation du levier 14, afin de protéger le dispositif de déclenchement 8 agencé à l'intérieur du boîtier 12.

Préférentiellement, la butée complémentaire 62 est ménagée sur la paroi inférieure 30 du boîtier 12.

L'organe élastique 16 s'étend selon le deuxième axe B, en appui entre le premier siège porté par l'organe de réglage 36 et le deuxième siège 48 porté par l'extrémité supérieure 44 du levier 14, de sorte qu'il exerce un effort de rappel sur l'extrémité supérieure 44 du levier 14 vers sa position de repos.

L'organe élastique 16 présente une raideur adaptée pour que le ressort se comprime en réponse à un seuil de force d'impact prédéterminé.

Les moyens de réglage 18 comprennent avantageusement l'organe de réglage 36, et une tige 64 qui s'étend selon le deuxième axe B.

La tige 64 est portée par l'extrémité supérieure 44 du levier. Cette tige 64 est par exemple fixe par rapport au levier 14. La tige 64 sert de guide au ressort 16.

L'organe de réglage 36 est mobile en rotation autour du deuxième axe B et propre à se déplacer en direction du deuxième siège 48 lorsqu'il est tourné autour du deuxième axe B suivant un sens de rotation prédéterminé. Ainsi, une rotation de l'organe de réglage 36 dans le sens de rotation prédéterminé entrainera la compression de l'organe élastique 16, de manière à régler la contrainte initiale appliquée sur le ressort 16 lorsque le levier 14 position de repos.

Avantageusement la tige 64 présente un filetage coopérant avec les spires du ressort 16 et l'organe de réglage 36 est solidaire en rotation de l'organe élastique 16 autour du deuxième axe B.

Le dispositif de déclenchement 8 est agencé dans le boîtier 12. Ce dispositif de déclenchement 8 est activable par le levier 14 lorsque ce levier 14 est en position d'activation.

Le dispositif de déclenchement 8 comprend un doigt de déclenchement 66 et un contacteur 68 apte à entrer en contact avec le doigt de déclenchement 66.

Dans l'exemple illustré sur la figure 2, le contacteur 68 est fixé sur une partie avant du levier 14. Ce contacteur 68 est relié à un circuit électrique 70 apte à transmettre un signal d'alerte lorsque le doigt de déclenchement 66 coopère avec ce contacteur 68.

Ce système d'alerte peut être envoyé à destination d'un dispositif d'avertissement pour le conducteur, et/ou d'un dispositif de freinage d'urgence.

Préférentiellement, le contacteur 68 comporte un galet 72 situé sur une partie supérieure du contacteur 68 et destiné à entrer en contact avec le doigt de déclenchement 66 lorsque le levier 14 est en position d'activation.

Le galet 72 présente une forme générale adaptée pour entrer en contact avec le doigt de déclenchement 66, par exemple il est de forme semi-sphérique.

Le doigt de déclenchement 66 présente par exemple une forme générale d'équerre. Le doigt de déclenchement 66 comporte une première partie 74 sensiblement verticale destinée à être fixée sur la surface interne frontale 34 de la paroi frontale 20 du boîtier 12, et une deuxième partie 76 sensiblement horizontale comprenant une extrémité 78 dirigée vers l'intérieur du boîtier 12 est destinée à entrer en contact avec le galet 72 du contacteur 68.

Selon une variante de réalisation, le contacteur 68 est fixé sur le boîtier 12 et le doigt de déclenchement 66 est fixé sur le levier 14.

Un procédé de détection d'un obstacle, utilisant le dispositif de détection 2 décrit précédemment, va maintenant être décrit.

Dans un premier temps, lorsqu'un obstacle se trouve sur la voie, la barre de détection 4 entre en contact avec cet obstacle, recevant un impact avec cet obstacle.

En réponse à l'impact reçu, la barre de détection 4 est déplacée vers l'arrière du boîtier 12.

Elle entraîne ainsi conjointement le levier 14 en rotation autour du premier axe A, depuis la position de repos vers la position d'activation, à l'encontre de l'effort de rappel appliqué par l'organe élastique 16 sur ce levier 14.

En effet, l'extrémité supérieure 44 du levier 14 est déplacée selon le deuxième axe B, vers la paroi frontale 20 du boîtier 12, entraînant ainsi la compression de l'organe élastique 16 vers la paroi frontale 20 du boîtier 12. L'effort de rappel définit donc un seuil de détection, que la force de l'impact doit dépasser pour que le levier 14 passe dans sa position d'activation. Il est à noter que cet effort de rappel dépend de la précontrainte appliquée à l'organe élastique 16 par les moyens de réglage 18.

Conjointement au déplacement du levier 14, le galet 72 du contacteur 68 est déplacé vers le doigt de déclenchement 66 situé sur la surface interne frontale 34 de la paroi frontale 20.

Lorsque le levier 14 atteint la position d'activation, le galet 72 du contacteur 68 entre en contact avec le doigt de déclenchement 66.

Le contact électrique entre le contacteur 68 et le doigt de déclenchement 66 entraîne la fermeture du circuit électrique 70.

La butée de fin de course 60 du levier 14 vient au contact de la butée complémentaire 62 du boîtier 12 de sorte que le mouvement en rotation du levier 14 autour du premier axe A est limité. De cette manière, le galet 72 du contacteur 68 et le doigt de déclenchement 66 sont préservés des potentiels dommages résultants d'un impact entre eux.

Le circuit électrique 70 envoie ensuite un signal d'alerte à une unité de traitement de l'information qui déclenche une procédure de freinage d'urgence.

Un procédé de réglage du dispositif de détection 2 va maintenant être décrit.

Tout d'abord un opérateur choisit l'organe élastique 16 parmi une gamme de ressorts prédéfinis qui possèdent des propriétés de raideur et de longueur différentes.

Le choix du ressort 16 réduit la plage de valeurs de la force d'impact entraînant le déclenchement du freinage d'urgence.

L'organe élastique 16 est alors installé dans le boîtier 12, entre le premier siège porté par l'organe de réglage 36 monté sur le boîtier 12 et le deuxième siège 48 de l'extrémité supérieure 44 du levier 14.

Ensuite, l'organe de réglage 36 est manipulé pour entrainer la compression de l'organe élastique 16, de manière à appliquer une précontrainte sur cet organe élastique 16. De cette manière, le seuil de détection d'impact est prédéterminé en fonction du véhicule à équiper, notamment en fonction de la vitesse et de la masse prévues pour le véhicule en service, et en fonction de la masse des obstacles considérés comme gênants pour le véhicule.

Les modes de réalisation décrits ci-dessus ne sont que des exemples. Des modifications pourraient être apportées sans modifier le fonctionnement du dispositif.

Ainsi, on pourrait prévoir un organe élastique autre qu'un ressort de compression hélicoïdal, par exemple un ressort à lame, auquel cas d'autres moyens de réglage sont à prévoir.

On peut également prévoir une forme différente du boîtier ou du levier, ou une barre de détection de forme cylindrique.

Il apparaît clairement que le dispositif de détection décrit ci-dessus permet un réglage simplifié du seuil de détection d'un impact.

## Revendications

1. Dispositif (2) de détection d'obstacle pour un véhicule ferroviaire, comportant :
- une barre de détection (4) destinée à s'étendre transversalement au véhicule et propre à recevoir un impact avec un obstacle,
- au moins un assemblage (6) de détection d'un impact, supportant la barre de détection (4) et comprenant :
• un boîtier (12) destiné à être rapporté sur le véhicule,
• un levier (14) solidaire de la barre de détection (4) et mobile en rotation par rapport au boîtier (12) autour d'un premier axe (A) parallèle à la barre de détection (4), entre une position de repos et une position d'activation, et
• un organe élastique (16) de rappel du levier (14) vers sa position de repos, et
- un dispositif (8) de déclenchement activable par le levier en position d'activation, et dans lequel l'assemblage de détection (6) comprend des moyens de réglage (18), propres à appliquer une précontrainte sur l'organe élastique (16),
**caractérisé en ce que** :
- l'organe élastique (16) est un ressort de compression hélicoïdal s'étendant dans la direction d'un deuxième axe (B) perpendiculaire au premier axe (A), entre un premier siège porté par le boîtier (12) et un deuxième siège (48) porté par le levier (14)
- le dispositif de déclenchement (8) comporte un contacteur (68) porté par l'un parmi le levier (14) ou le boîtier (12) et un doigt de déclenchement (66) fixé à l'autre parmi le levier (14) ou le boîtier (12), de sorte que le contacteur (68) vient au contact du doigt de déclenchement (66) lorsque le levier est en position d'activation.

2. Dispositif de détection (2) selon la revendication 1, comportant une tige (64) logée dans le ressort hélicoïdal (16), et propre à guider ce ressort (16).

3. Dispositif de détection (2) selon la revendication 2, dans lequel les moyens de réglage (18) comportent un organe de réglage (36), portant le premier siège, mobile en rotation autour du deuxième axe (B) et propre à se déplacer en direction du deuxième siège (48) lorsqu'il est tourné autour du deuxième axe (B) suivant un sens de rotation prédéterminé.

4. Dispositif de détection (2) selon l'une quelconque des revendications précédentes, dans lequel le contacteur (68) comprend un galet (72) destiné à entrer en contact avec le doigt de déclenchement (66).

5. Dispositif de détection (2) selon l'une quelconque des revendications précédentes, dans lequel le levier (14) est articulé autour d'une liaison pivot élastique (56) par rapport au boîtier (12).

6. Dispositif de détection (2) selon l'une quelconque des revendications précédentes, dans lequel le levier (14) porte une butée (60), destinée à coopérer en position d'activation avec une butée complémentaire (62) ménagée sur le boîtier (12), pour limiter le mouvement en rotation du levier (14).

7. Procédé de détection d'un obstacle pour un véhicule ferroviaire, à l'aide d'un dispositif de détection (2) selon l'une quelconque des revendications précédentes, comprenant les étapes suivantes :
- impact d'un obstacle sur la barre de détection (4);
- déplacement de la barre de détection (4) en réponse à l'impact, déplacement du levier (14) vers sa position d'activation conjointement à la barre de détection (4), à l'encontre de l'effort de rappel généré par l'organe élastique (16) ;
- activation du dispositif de déclenchement (8) par le levier (14) en position d'activation ; et
- activation d'une procédure de freinage.

8. Procédé de réglage d'un dispositif de détection (2) selon l'une quelconque des revendications1 à 6, comprenant les étapes suivantes :
- choix de l'organe élastique (16),
- installation de l'organe élastique (16) dans le boîtier (12), et
- réglage de la précontrainte sur l'organe élastique (16) par manipulation des moyens de réglage (18).

## Patentansprüche

1. Vorrichtung (2) zur Hinderniserkennung für ein Schienenfahrzeug, umfassend:
- eine Erfassungsstange (4), die dazu bestimmt ist, sich quer zu dem Fahrzeug zu erstrecken, und geeignet ist, um einen Aufprall auf ein Hindernis aufzunehmen,
- mindestens eine Anordnung (6) zur Erfassung eines Aufpralls, die die Erfassungsstange (4) trägt und Folgendes umfasst:
• ein Gehäuse (12), das dazu bestimmt ist, an dem Fahrzeug angebaut zu werden,
• einen Hebel (14), der fest mit der Erfassungsstange (4) verbunden und in Bezug auf das Gehäuse (12) um eine erste Achse (A), die parallel zu der Erfassungsstange (4) ist, zwischen einer Ruhestellung und einer Aktivierungsstellung drehbar ist, und
• ein elastisches Organ (16) zur Rückstellung des Hebels (14) in seine Ruhestellung, und
- eine Auslösevorrichtung (8), die durch den Hebel in der Aktivierungsposition aktiviert werden kann, und bei der die Erfassungsanordnung (6) Einstelleinrichtungen (18) umfasst, die geeignet sind, um eine Vorspannung auf das elastische Organ (16) auszuüben,
**dadurch gekennzeichnet, dass**:
- das elastische Organ (16) eine schraubenförmige Druckfeder ist, die sich in Richtung einer zweiten Achse (B) senkrecht zu der ersten Achse (A) zwischen einem ersten Sitz, der von dem Gehäuse (12) getragen wird, und einem zweiten Sitz (48), der von dem Hebel (14) getragen wird, erstreckt
- die Auslösevorrichtung (8) einen Kontaktgeber (68), der von einem von dem Hebel (14) oder dem Gehäuse (12) getragen wird, und einen Auslösefinger (66), der an dem anderen von dem Hebel (14) oder dem Gehäuse (12) befestigt ist, umfasst, sodass der Kontaktgeber (68) den Auslösefinger (66) berührt, wenn der Hebel in der Aktivierungsposition ist.

2. Erfassungsvorrichtung (2) nach Anspruch 1, umfassend einen Stab (64), der in der Schraubenfeder (16) untergebracht ist und geeignet ist, diese Feder (16) zu führen.

3. Erfassungsvorrichtung (2) nach Anspruch 2, wobei die Einstelleinrichtungen (18) ein Einstellorgan (36) umfassen, das den ersten Sitz trägt, um die zweite Achse (B) drehbar ist und sich in Richtung des zweiten Sitzes (48) bewegen kann, wenn es um die zweite Achse (B) in einer vorgegebenen Drehrichtung gedreht wird.

4. Erfassungsvorrichtung (2) nach einem der vorherigen Ansprüche, wobei der Kontaktgeber (68) eine Rolle (72) umfasst, die dazu bestimmt ist, den Auslösefinger (66) zu berühren.

5. Erfassungsvorrichtung (2) nach einem der vorherigen Ansprüche, wobei der Hebel (14) gelenkig um eine elastische Schwenkverbindung (56) in Bezug auf das Gehäuse (12) gelagert ist.

6. Erfassungsvorrichtung (2) nach einem der vorherigen Ansprüche, wobei der Hebel (14) einen Anschlag (60) trägt, der dazu bestimmt ist, in der Aktivierungsposition mit einem komplementären Anschlag (62) zusammenzuwirken, der an dem Gehäuse (12) ausgebildet ist, um die Drehbewegung des Hebels (14) zu begrenzen.

7. Verfahren zum Erkennen eines Hindernisses für ein Schienenfahrzeug mittels einer Erfassungsvorrichtung (2) nach einem der vorherigen Ansprüche, umfassend die folgenden Schritte:
- Aufprallen eines Hindernisses auf die Erfassungsstange (4);
- Verschieben der Erfassungsstange (4) als Reaktion auf den Aufprall, Verschieben des Hebels (14) in seine Aktivierungsposition zusammen mit der Erfassungsstange (4) gegen die durch das elastische Organ (16) erzeugte Rückstellkraft;
- Aktivieren der Auslösevorrichtung (8) durch den Hebel (14) in der Aktivierungsposition; und
- Aktivieren eines Bremsvorgangs.

8. Verfahren zur Einstellung einer Erfassungsvorrichtung (2) nach einem der Ansprüche 1 bis 6, umfassend die folgenden Schritte:
- Auswählen des elastischen Organs (16),
- Einbauen des elastischen Organs (16) in das Gehäuse (12) und
- Einstellen der Vorspannung auf das elastische Organ (16) durch Manipulieren der Einstelleinrichtungen (18).

## Claims

1. A device (2) for detecting an obstacle for a railway vehicle, including:
- a detection bar (4) intended to extend transversely to the vehicle and able to receive an impact with an obstacle,
- at least one assembly (6) for detecting an impact, supporting the detection bar (4) and comprising:
• a casing (12) intended to be added onto the vehicle,
• a lever (14) secured to the detection bar (4) and movable in rotation relatively to the casing (12) around a first axis (A) parallel to the detection bar (4), between a rest position and an actuation position, and
• an elastic return member (16) of the lever (14) towards its rest position, and
- a triggering device (8) which may be actuated by the lever in the actuation position,
and wherein the detection assembly (6) comprises adjustment means (18), able to apply a pre-stress on the elastic member (16),
**characterized in that**:
- the elastic member (16) is a helical compression spring extending in the direction of a second axis (B) perpendicular to the first direction (A), between a first seat borne by the casing (12) and a second seat (48) borne by the lever (14),
- the triggering device (8) includes a contactor (68) borne by one from among the lever (14) or the casing (12) and a triggering finger (66) attached to the other one from among the lever (14) or the casing (12), so that the contactor (68) will come into contact with the triggering finger (66) when the lever is in an actuation position.

2. The detection device (2) according to claim 1, including a rod (64) accommodated in the helical spring (16), and able to guide this spring (16).

3. The detection device (2) according to claim2, wherein the adjustment means (18) include an adjustment member (36), bearing the first seat, movable in rotation around the second axis (B) and able to be displaced towards the second seat (48) when it is turned around the second axis (B) according to a predetermined direction of rotation.

4. The detection device (2) according to any of the preceding claims, wherein the contactor (68) comprises a roller (72) intended to come into contact with the triggering finger (66).

5. The detection device (2) according to any of the preceding claims, wherein the lever (14) is jointed around an elastic pivot connection (56) relatively to the casing (12).

6. The detection device (2) according to any of the preceding claims, wherein the lever (14) bears an abutment (60), intended to cooperate in the actuation position with an additional abutment (62) made on the casing (12), for limiting the movement in rotation of the lever (14).

7. A method for detecting an obstacle for a railway vehicle, by means of a detection device (2) according to any of the preceding claims, comprising the following steps:
- impact of an obstacle on the detection bar (4);
- displacement of the detection bar (4) in response to the impact, displacement of the lever (14) towards its actuation position jointly with the detection bar (4), against the return force generated by the elastic member (16);
- actuation of the triggering device (8) by the lever (14) in the actuation position; and
- actuation of a breaking procedure.

8. A method for adjusting a detection device (2) according to any of claims 1 to 6, comprising the following steps:
- selecting the elastic member (16),
- installing the elastic member (16) in the casing (12), and
- adjustment of the pre-stress on the elastic member (16) by manipulating the adjustment means (18).
